# EUROPÄISCHE PATENTANMELDUNG

(11) **EP 0 530 589 A1**
(43) Veröffentlichungstag der Anmeldung: **10.03.1993**
(21) Anmeldenummer: 92114111.5
(22) Anmeldetag: 19.08.1992
(51) Int. Cl.: G02B 23/08, G02B 13/14

(54) **Rundblick-Periskop für Tag- und Nachtsicht**

(30) Priorität: 04.09.1991 DE 9110969 U
(71) Anmelder: WILD LEITZ SYSTEMTECHNIK GmbH, D-35539 Wetzlar (DE)
(72) Erfinder: Schmidt, Horst, W-6330 Wetzlar 21 (DE)

(57) **Zusammenfassung**

Das Rundblick-Periskop für Tag- und Nachtsicht weist einen Rundblickkopf 12 auf, in dem ein in Elevation und Azimut beweglicher Ausblickspiegel 15 hinter einem bispektralen Abschlußfenster 14 gelagert ist. Der Ausblickspiegel 15 lenkt die einfallende Strahlung direkt oder nach Durchtritt durch eine Breitbandoptik 25,26 auf einen Spektralteiler 16. Als Material für das Abschlußfenster 14 und/oder die Breitbandoptik 25,26 ist Zinkselenid ZnSe verwendet.

## Beschreibung

Die Neuerung betrifft ein Rundblick-Periskop für Tag- und Nachtsicht mit einem Rundblickkopf, in dem ein in Elevation und Azimut beweglicher Ausblickspiegel hinter einem mindestens bispektralen Abschlußfenster gelagert ist, wobei der Ausblickspiegel die einfallende Strahlung direkt oder nach Durchtritt durch eine Breitbandoptik auf einen Strahlenteiler lenkt.

Aus der DE 35 15 428 A1 ist ein Rundblick-Periskop mit umschaltbarer Tagsicht- und Wärmebildoptik bekannt, das ein für beide Spektralbereiche durchlässiges Abschlußfenster aufweist, hinter dem ein in Elevation und Azimut beweglicher Ausblickspiegel angeordnet ist. Dieser lenkt die Abbildungsstrahlen auf die ihnen zugeordneten Abbildungsoptiken, wobei eine Hauptoptik Glieder aufweist, die von einem optischen Breitbandsystem gebildet sind, welche für einen weiten Spektralbereich von z. B. 0,4 bis 14 µm transparent sind.

Aus der DE 38 23 647 A1 ist ein Rundblick-Periskop mit einem Rundblickkopf bekannt, in dem ein in Elevation und Azimut beweglicher Ausblickspiegel gelagert ist, der ein mindestens bispektrales Abschlußfenster und einen Tubus aufweist, in dem wenigstens drei unterschiedliche Meß- bzw. Beobachtungseinrichtungen angeordnet sind, wobei der Ausblickspiegel deren Strahlengänge koaxial durch das Abschlußfenster lenkt. Eine Strahlenteilung erfolgt bei diesem bekannten Rundblick-Periskop bereits vor den eigentlichen Abbildungsoptiken für Tagsicht- und Wärmebild, sodaß ab der Strahlenteilung in bezug auf Bildfehler gut korrigierbare Einzelstrahlengänge bei weitgehender Reflexfreiheit und hoher Transmission vorliegen.

Als Material für das Abschlußfenster dieser bekannten Rundblick-Periskope und häufig auch für wenigstens ein optisches Bauelement der Breitbandoptik ist bisher Zinksufid ZnS eingesetzt worden, und zwar in beiden der vorstehend genannten Vorrichtungen als eine durch thermische Nachbehandlung farbarm eingestellte Variante oder Modifikation. Es hat sich indessen gezeigt, daß Kontrast und Bildbrillanz im Tagesbild häufig unbefriedigend sind, was offenbar auf Streuungen durch das Zinksulfid zurückzuführen ist und sich sogar in "Wolken" im Bild äußern kann.

Aus der EU-0 130 594 B1 ist ein Verfahren zur Herstellung von Chalkogeniden wie Zinksulfid ZnS und Zinkselenid ZnSe bekannt, die als Ausgangsstoffe für glasartige, optische Bauteile verwendet werden. Erwähnt sind die Durchlässigkeit dieser Verbindungen im Infrarotbereich und ein möglicher Einsatz in der Laser- und Lichtleitertechnik. Ein Hinweis über die Verwendung dieser Materialien als Ausblickfenster für Rundblick-Periskope und/oder für optische Elemente eines Breitbandsystems ist dieser Schrift nicht entnehmbar.

Im Gegensatz zum Zinksulfid, das durch die bereits erwähnte thermische Nachbehandlung eine farbarme Variante bildet, wurde Zinkselenid ZnSe aufgrund seiner ausgeprägten und unbeseitigbaren Gelbfärbung für den erwähnten Zweck bislang nicht in betracht gezogen.

Aufgabe der Neuerung ist es, ein Material für die Verwendung als optisches Bauteil in Rundblick-Periskopen der eingangs genannten Art anzugeben, das eine hohe Transmission vom sichtbaren Teil des Spektrums bis hin zu 12 µ hat, das ferner eine geringe Streuung auch im sicht-baren Spektralbereich besitzt und das ein kontrastreiches Bild liefert und somit die Nachteile von Zinksulfid nicht aufweist.

Gemäß der Neuerung ist diese Aufgabe durch das kennzeichnende Merkmal des Anspruchs gelöst. Mit der Verwendung von Zinkselenid anstelle von Zinksulfid wurde ein technisches Vorurteil überwunden, und es hat sich überraschend gezeigt, daß die Gelbfärbung weder den Bildeindruck stört noch die erhaltene Bildinformation mindert.

Weitere Einzelheiten der Neuerung gehen aus der Beschreibung von zwei in der Zeichnung schematisch dargestellten Ausführungsbeispielen hervor. Dabei sind alle zum Verständnis der Neuerung nicht erforderlichen Bauteile nicht bezeichnet.

Es zeigen:
- Fig. 1: ein Rundblick-Periskop in einer ersten Ausführungsform in geschnittener Seitenansicht und
- Fig. 2: eine zweite Ausführungsform des Rundblick-Periskops in der gleichen Ansicht.

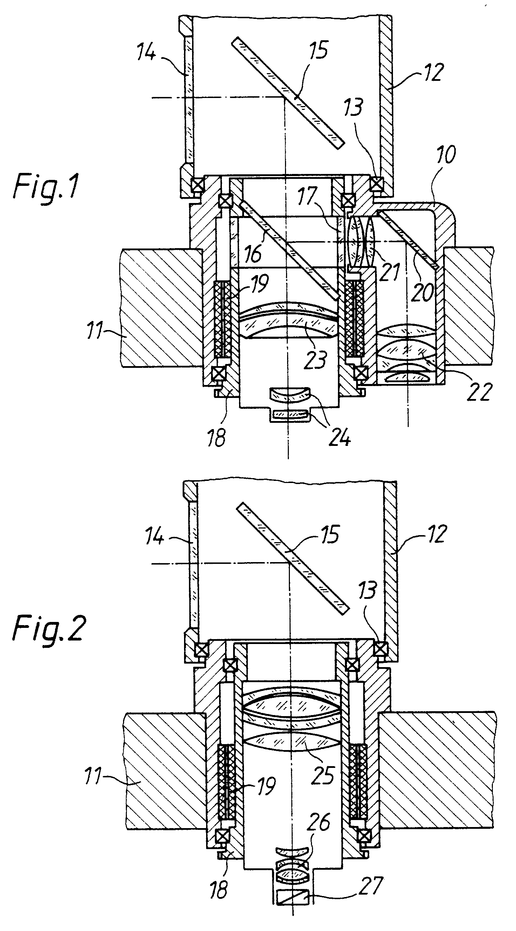

Das in Fig. 1 gezeigte Rundblick-Periskop weist einen Tubus 10 auf, der mit einer Tragwand 11 fest verbunden ist. Auf dem Tubus 10 und oberhalb der Tragwand 11 ist ein Rundblickkopf 12 auf einem Kugellager 13 um n x 360^{o} drehbar angeordnet. Der Rundblickkopf 12 weist ein bispektrales Abschlußfenster 14 auf, das gemäß der Neuerung aus Zinkselenid besteht. Hinter dem Abschlußfenster 14 ist ein in Elevation und Azimut beweglicher Ausblickspiegel 15 gelagert. Im Beobachtungsstrahlengang unmittelbar nach dem Ausblickspiegel 15 ist ein um 45^{o} geneigter Spektralteiler 16 innerhalb des Tubus 10 befestigt. Das durch das Abschlußfenster 14 einfallende und vom Ausblickspiegel 15 lotrecht auf den Spektralteiler 16 abgelenkte Szenenlicht wird von diesem in einen sichtbaren Spektralbereich und einen IR-Spektralbereich zerlegt. Der visuelle Strahlenanteil wird mittels des Spektralteilers 16 durch ein lichtdurchlässiges Bauteil 17 ausgespiegelt und bildet den Strahlengang für die Tagbeobachtung. Nachdem die Strahlenteilung bei diesem bekannten Rundblick-Periskop bereits unmittelbar nach dem Ausblickspiegel 15 erfolgt, genügt es für ein kontrastreiches und "wolkenfreies" Tagsichtbild, wenn lediglich für das Abschlußfenster 14 als Material Zinkselenid verwendet wird. Das lichtdurchlässige Bauteil 17 verbindet den Rundblickkopf 12 mit dem Tubus 10. Es ist an seinem unteren Rand mit einem zylindrischen Mantel 18 verbunden und weist elektrische, transparente Leiterbahnen auf, die mit einem Schleifring 19 elektrisch verbunden sind. Der vom Spektralteiler ausgespiegelte visuelle Strahl wird nach Ablenkung an einem Reflexionselement 20 und Durchtritt durch ein Objektiv- und Okularsystem 21, 22 einer hier nicht gezeigten, da bekannten Tagsichteinrichtung zugeführt. Die vom Objekt ausgehenden IR-Strahlen durchdringen nach Ablenkung durch den Ausblickspiegel 15 den Spektralteiler 16 und gelangen über ein IR-Objektiv 23 und ein IR-Okular 24 auf eine hier nicht gezeigte Wärmebildeinrichtung.

Das in Fig. 2 gezeigte Ausführungsbeispiel unterscheidet sich von demjenigen gemäß Fig. 1 im wesentlichen dadurch, daß das durch das Abschlußfenster 14 einfallende und vom Ausblickspiegel 15 abgelenkte Szenenlicht ungeteilt eine Breitbandoptik 25, 26 mit einer spektralen Durchlässigkeit zwischen etwa 0,4-13,5 µm durchdringt und erst dann von einem Teilerwürfel 27 in einen visuellen und einen IR-Strahlengang aufgespalten wird. Bei dieser Ausführungsform bestehen Abschlußfenster 14 und Breitbandoptik 25, 26 gemäß der Neuerung in mindestens einer Komponente aus Zinkselenid.

## Patentansprüche

1. Rundblick-Periskop für Tag- und Nachtsicht mit einem Rundblickkopf, in dem ein in Elevation und Azimut beweglicher Ausblickspiegel hinter einem mindestens bispektralen Abschlußfenster gelagert ist, wobei der Ausblickspiegel die einfallende Strahlung direkt oder nach Durchtritt durch eine Breitbandoptik auf einen Strahlteiler lenkt, **dadurch gekennzeichnet**, daß als Material für das Abschlußfenster (14) und/oder die Breitbandoptik (25, 26) Zinkselenid ZnSe verwendet ist.
